# EUROPÄISCHE PATENTSCHRIFT

(11) **EP 0 378 810 B1**
(45) Veröffentlichungstag und Bekanntmachung des Hinweises auf die Patenterteilung: **28.04.1993**
(21) Anmeldenummer: 89123119.3
(22) Anmeldetag: 14.12.1989
(51) Int. Cl.: B60T 13/66, B60T 7/20

(54) **Druckluftbremseinrichtung für Kraftfahrzeuge**
Compressed air brake installation for motor vehicles
Installation de freinage à air comprimé pour véhicules à moteur

(30) Priorität: 18.01.1989 DE 3901269
(43) Veröffentlichungstag der Anmeldung: 25.07.1990
(73) Patentinhaber: ROBERT BOSCH GMBH, 70442 Stuttgart (DE)
(72) Erfinder: Berg, Peter, D-7146 Tamm (DE); Grauel, Ingolf, Dipl.-Ing., D-7143 Vaihingen-Enz (DE); Stumpe, Werner, Dipl.-Ing., D-7000 Stuttgart 50 (DE); Beck, Siegfried, D-7000 Stuttgart 80 (DE); Sprung, Peter, Dipl.-Ing., D-7016 Gerlingen (DE); Grau, Eberhard, Dipl.-Ing., D-7016 Gerlingen (DE); Wrede, Jürgen, Dipl.-Ing., D-7000 Stuttgart 50 (DE)

(56) Entgegenhaltungen:
- DE-A- 2 202 676
- DE-A- 3 603 963

## Beschreibung

### Stand der Technik

Die Erfindung geht aus von einer Druckluftbremseinrichtung für Kraftfahrzeuge nach der Gattung des Hauptanspruches. Eine derartige Druckluftbremseinrichtung ist bekannt (DE-OS 36 03 963).

Bei dieser bekannten Druckluftbremseinrichtung greift das sensorgesteuerte Korrekturventil in die Anhängerbremsleitung ein, um den Anhängerbremsdruck entsprechend zu variieren. Da aber die Anhängerbremsleitung bei einer Zweileitungsbremsanlage zur Bremssignalübermittlung an das Anhängerbremsventil dient, muß die Anhängerbremsleitung im Notfall immer frei sein. Deshalb hat ein solcher Eingriff in die Anhängerbremsleitung den Nachteil, daß bei einer Fehlschaltung des Korrekturventils das Anhängerbremsventil über die Anhängerbremsleitung, z.B. bei einem Feststellbremsvorgang nicht mehr im Bremssinn umstellbar ist.

### Vorteile der Erfindung

Die eingangs genannte Druckluftbremseinrichtung mit den kennzeichnenden Merkmalen des Hauptanspruches hat demgegenüber den Vorteil, daß die Anhängerbremsleitung auch bei einer Fehlschaltung des Korrekturventils für eine Ansteuerung des Anhängerbremsventils offen bleibt. Damit ist ein wesentlicher Sicherheitsfaktor geschaffen.

Dazu kommt, daß eine vom Anhängersteuerventil in bisher üblicher Weise eingesteuerte Voreilschaltung der Anhängerbremse im Anhängersteuerventil jetzt entfallen kann; damit wird dieses Ventil einfacher im Aufbau.

Schließlich kann auch die Gesamtabmessung des Anhängersteuerventils reduziert werden, da die Steuerkolben keine so großen Wirkflächen benötigen, um ein entsprechendes Ansprechverhalten aufzuweisen. Ansprechdruck und Hystere können elektrisch ausgeglichen werden.

### Zeichnung

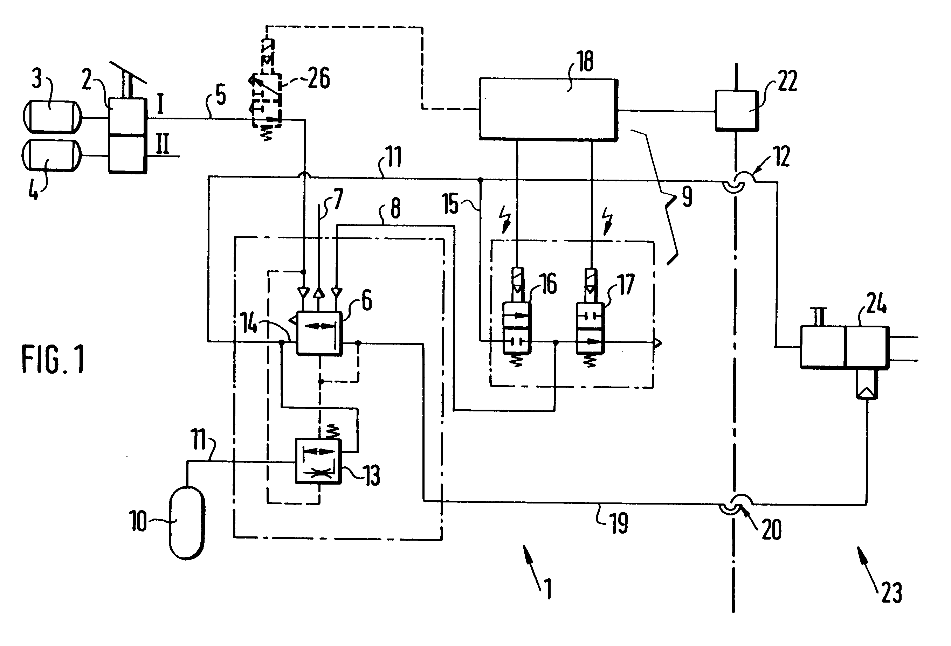

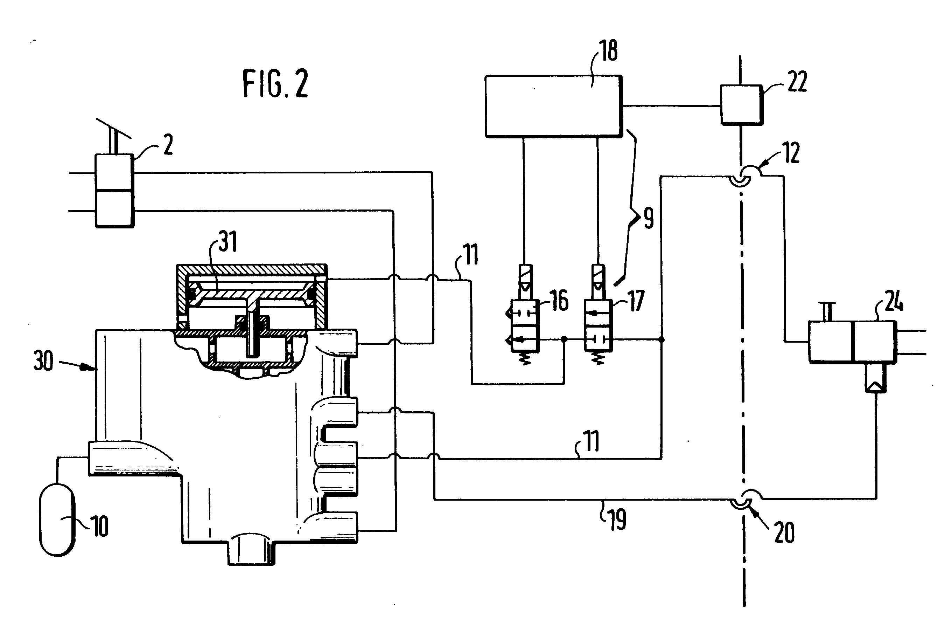

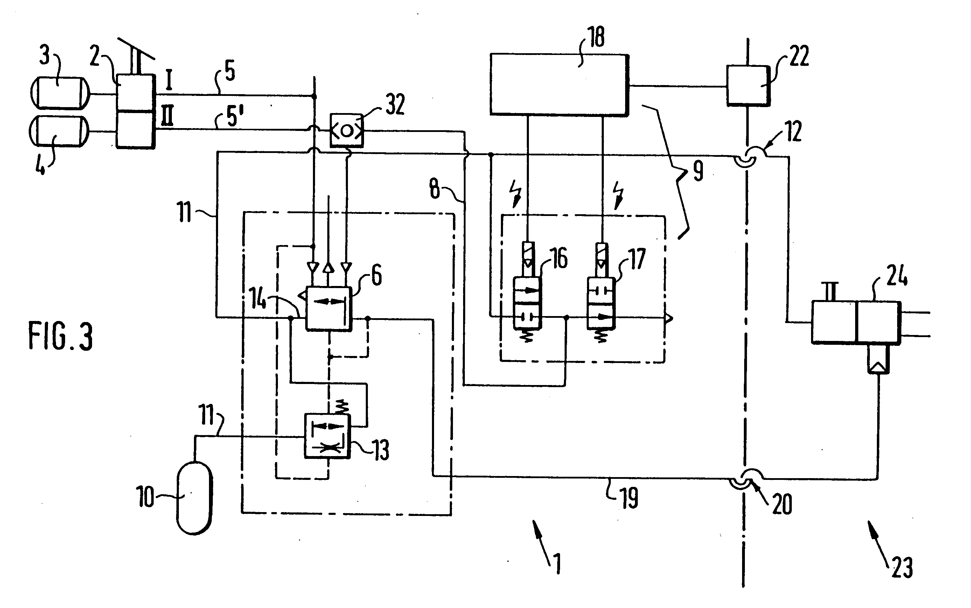

Drei Ausführungsbeispiele der Erfindung sind in der Zeichnung dargestellt und in der nachfolgenden Beschreibung näher erläutert. Es zeigen: Figur 1 eine Druckmittelbremseinrichtung mit einem herkömmlichen Anhängersteuerventil, Figur 2 eine Druckmittelbremseinrichtung mit herkömmlichem Anhängerbremsventil und einer Aufschaltung des Korrekturventils und Figur 3 eine Variante der Druckmittelbremseinrichtung nach Figur 1.

### Beschreibung der Ausführungsbeispiele

Eine Druckmittelbremseinrichtung hat auf einem Zugwagen 1 ein zweikreisiges Betriebsbremsventil 2, das Druckluft aus zwei Vorratsbehältern 3 und 4 in je einen Betriebsbremskreis I und II gelangen läßt. Der Bremskreis I steuert über eine Leitung 5 ein Anhängersteuerventil 6 mit Druckanstieg. Eine zweite Steuerleitung 7 ist von einer nicht dargestellten Feststellbremse herangeführt; mit ihrem Druck kann das Anhängersteuerventil 6 durch Druckabfall im Bremssinn umgeschaltet werden.

Eine dritte Steuerleitung 8 am Anhängersteuerventil 6 dient wiederum einer Druckanstiegssteuerung. Sie ist aber nicht von dem Betriebsbremsventil 2 herangeführt, sondern von einem Korrekturventil 9 und erhält ihren Druck aus einem auf dem Zugwagen 1 angeordneten Anhänger-Vorratsbehälter 10. In der Verbindung einer Anhängervorratsleitung 11 vom Vorratsbehälter 10 zu einem Vorratsluft-Kupplungskopf 12 liegt ein an das Anhängersteuerventil 6 angeflanschtes Drosselventil 13, das von Drücken aus den gestrichelt eingezeichneten Leitungen umschaltbar ist. Eine erste Abzweigung 14 der Anhängervorratsleitung 11 führt zum Anhängersteuerventil 6 und eine zweite Abzweigung 15 der Anhängervorratsleitung 11 führt zu zwei Magnetventilen 16 und 17 des Korrekturventils 9. Die Impulse für die Magnetventile 16 und 17 werden durch ein Steuergerät 18 erstellt, das ebenfalls zum Korrekturventil 9 gehört.

Vom Anhängersteuerventil 6 nimmt eine Anhängerbremsleitung 19 ihren Ausgang, die zu einem Bremsleitungskupplungskopf 20 führt. Das Steuergerät 18 hat eine Verbindung mit einem Sensor 22 für die Auflaufkräfte zwischen einem mit dem Zugwagen 1 gekuppelten Anhänger 23 und dem Zugwagen 1.

Der Anhänger 23 hat eine übliche Anhängerbremsanlage, von der im wesentlichen jedoch nur ein Anhängerbremsventil 24 dargestellt ist.

### Wirkungsweise

Beim Betätigen des Betriebsbremsventils 2 erhält die Leitung 5 Druck, um das Anhängersteuerventil 6 anzusteuern. Durch das Auflaufen des Anhängers 23 wird der Sensor 22 betätigt, der ein Signal an das Steuergerät 18 gibt. Dieses bestromt die beiden Magnetventile 16 und 17, wodurch die Magnetventile 16 und 17 aus der gezeichneten Lage in ihre jeweils andere Stellung umschalten. Damit wird die vorher offene Außenluftverbindung der Leitung 8 der Leitung 8 geschlossen und Vorratsluft aus dem Vorratsbehälter 10 wird als Steuerluft zum Anhängersteuerventil 6 geleitet; über die beiden Magnetventile 16 und 17 wird also wahlweise Vorratsdruck in die Leitung 8 eingesteuert oder letztere wird entlüftet. Durch Veränderung der Ventilöffnungs- oder Schließzeiten der beiden Magnetventile 16 und 17 kann praktisch jeder beliebige Druck zwischen Null und dem Vorratsdruck über die Leitung 8 zum Anhängersteuerventil 6 eingesteuert werden. Damit ist dann der Bremsdruck in der Anhängerbremsleitung 19 entsprechend zu variieren.

Die Ansteuerung der beiden Magnetventile 16 und 17 wird dabei von den an der mechanischen Verbindungseinrichtung der beiden Fahrzeuge 1 und 23 auftretenden Kräften beeinflußt.

Jedoch kann bei dem Ausführungsbeispiel nach der Figur 1 der Druck in der Anhängerbremsleitung 19 nicht unter den Druck fallen, der vom Bremskreis I über die Leitung 5 eingesteuert wird, da in einem solchen Fall automatisch der Druck in der Leitung 5 zum Führungsdruck wird.

Es ist auch möglich, in die Leitung 5 ein 3/2-Wege-Magnetventil 26 einzusetzen, wie es in der Figur 1 strichpunktiert dargestellt ist. Die Magnetseite dieses Magnetventils ist an das Steuergerät 18 angeschlossen.

Diese Variante arbeitet derart, daß der Druck in der Anhängerbremsleitung 19 unter den vom Betriebsbremsventil 2 eingesteuerten Druck abgesenkt werden kann. Dazu wird die Leitung 5 entlüftet, so daß der in die Leitung 8 eingesteuerte Druck, der niedriger ist als der am Bremsventil 2 anstehende Druck, den Druck in der Anhängerbremsleitung 19 beeinflußen kann. Das 3/2-Wege-Magnetventil 26 wird elektrisch angesteuert, es kann aber auch pneumatisch gesteuert werden.

Die Ausführung mit einem 3/2-Wege-Magnetventil 26 ist zwar aufwendiger als eine ohne dieses Ventil, sie hat aber den Vorteil, daß auch ein ziehender Anhänger mittels dann erforderlicher Druckabsenkung an den Bremszustand des Zugwagens anzupassen ist. Auf jeden Fall kann die Druckluftbremseinrichtung wahlweise baukastenartig mit oder ohne 3/2-Wege-Ventil ausgerüstet werden.

Die Figur 2 zeigt eine Abwandlung der Bauart nach der Figur 1. Hier ist ein übliches Anhängersteuerventil 30 verwendet, das mit einem zusätzlichen Schaltkolben 31 ausgerüstet ist. Mittels dieses Schaltkolbens 31 kann der von den beiden Magnetventilen 16 und 17 des Korrekturventils 9 jeweils eingesteuerte Druck dem Anhängersteuerventil 30 aufgeschaltet werden.

Eine solche Ausführung hat den Vorteil, daß die bei einem Anhängersteuerventil übliche, vom Zweikreis-Betriebsbremsventil 2 herrührende zweikreisige Ansteuerung voll erhalten bleibt, d.h. bei Stromausfall stehen auf jeden Fall zwei Ansteuerkreise zur Verfügung.

Wenn die Bauart nach der Figur 2 so arbeiten soll, wie die Bauart nach der Figur 1 mit dem 3/2-Wege-Ventil, dann muß auch eine Kammer unter dem Schaltkolben 31 zur Steuerung mit herangezogen werden.

Es ist auch möglich, in eine zweite vom Betriebsbremsventil 2 zum Anhängersteuerventil 6 geführte Leitung 5′ ein Zweiwege-Rückschlagventil 32 einzusetzen, dessen zweite Seite an die von der Anhängervorratsleitung abgezweigte, von dem Steuergerät 18 elektrisch angesteuerten Drucksteuerventil 16, 17 überwachte Steuerleitung 8 angeschlossen ist.

Dieses Zweiwege-Rückschlagventil 32 läßt den vom Betriebsbremsventil 2 bzw. vom Drucksteuerventil 16, 17 jeweils höheren ankommenden Druck in die Steuerkammer des Anhängersteuerventils 6 gelangen. Damit ist erreicht, daß solange keine Deichselkraft auftritt und das Drucksteuerventil 16, 17 auf Entlüftung steht, der vom Betriebsbremsventil 2 in beiden Leitungen 5 und 5′ eingesteuerte Druck zum Anhängersteuerventil 6 durchgelassen wird.

Schiebt nun der Anhänger 23 auf und ist deswegen ein höherer Bremsdruck im Anhänger 23 erforderlich, steuert das vom Sensor 22 über das Steuergerät 18 angesteuerte Drucksteuerventil 16, 17 einen höheren Druck ein als er vom Betriebsbremsventil 2 kommt. Das Zweiwege-Rückschlagventil 32 läßt dann den höheren Druck vom Drucksteuerventil 16, 17 zum Anhängersteuerventil 6 durch und sperrt zum Betriebsbremsventil 2 hin ab.

Der Vorteil einer solchen Bauart liegt darin, daß bei Spannungsausfall zwei pneumatische Bremskreise zum Ansteuern des Anhängersteuerventils 6 zur Verfügung stehen.

Dazu kommt, daß bei der zuerst beschriebenen Bauart bei Ausfall des 1. Bremskreises (Leitung) die Deichselkraft durch die Deichselkraftregelung auf Null gesetzt wird, d.h. das Zugfahrzeug 1 kann nicht durch einen ziehenden Anhänger 23 zusätzlich gebremst werden.

Bei der zuletzt genannten Variante wirkt dagegen der volle Bremsdruck im Anhänger 23, da der Druck ja nicht unter den vom Betriebsbremsventil 2 in die Leitung 5′ eingesteuerten Druck fallen kann.

## Patentansprüche

1. Druckluftbremseinrichtung für Kraftfahrzeuge (1, 23), mit mindestens einem durch ein Betriebsbremsventil (2) aussteuerbaren Betriebsbremssteuerkreis (I), einem den Druck in einer Anhängerbremsleitung (19) steuernden, an den Betriebsbremssteuerkeis (I) angeschlossenen Anhängersteuerventil (6) einer Zweileitungsbremsanlage mit einem über die Anhängerbremsleitung (19) und eine Anhängervorratsleitung (11) mit dem Anhängersteuerventil (6) verbundenen Anhängerbremsventil (24) und mit einem durch entsprechende, an einer mechanischen Verbindungseinrichtung des Kraftfahrzeuges (1, 23) mittels Sensor (22) gemessenen Kräfte steuerbaren Korrekturventil (9), welches in einer von der Anhängervorratsleitung (11) abgezweigten Steuerleitung (8) liegt, dadurch gekennzeichnet, daß der Druck in der zum Anhängersteuerventil (6) geführten Steuerleitung (8) durch das Korrekturventil (9) beeinflußbar ist, während die Anhängerbremsleitung (19) kein Sperrglied enthält.

2. Druckluftbremseinrichtung nach Anspruch 1, dadurch gekennzeichnet, daß der von dem Korrekturventil (9) varriierte Vorratsdruck dem Anhängersteuerventil (6, 30) als Druckgröße zugeführt ist.

3. Druckluftbremseinrichtung nach Anspruch 1, dadurch gekennzeichnet, daß bei Auslegung der Bremseinrichtung mit üblichem Anhängersteuerventil (30) der von dem Korrekturventil (9) beeinflußte Vorratsdruck dem Anhängersteuerventil (30) zusätzlich aufgeschaltet ist.

4. Druckluftbremseinrichtung nach einem der Ansprüche 1 bis 3, dadurch gekennzeichnet, daß das Korrekturventil (9) zwei 2/2-Wege-Magnetventile (16, 17) aufweist, von denen eines ein in der Steuerleitung (8) angeordnetes Durchgangsventil ist und das andere ein an die Steuerleitung (8) angeschlossenes Außenluftventil ist.

5. Druckluftbremseinrichtung nach einem der Ansprüche 1 bis 4, dadurch gekennzeichnet, daß in eine von einem Betriebsbremsventil (2) unmittelbar zu dem Anhängersteuerventil (6) geführte Leitung (5) ein 3/2-Wege-Ventil (26) eingesetzt ist, mit dem der anhängersteuerventilseitige Leitungsteil der Leitung (5) entlüftbar ist.

6. Druckluftbremseinrichtung nach einem der Ansprüche 1 bis 4, dadurch gekennzeichnet, daß in eine (5′) der vom Betriebsbremsventil (2) zum Anhängersteuerventil (6) geführten Leitungen (5, 5′) ein Zweiwege-Rückschlagventil (32) eingesetzt ist, dessen zweite Seite an die von der Anhängervorratsleitung (11) abgezweigte Steuerleitung (8) angeschlossen ist.

## Claims

1. Compressed air brake device for motor vehicles (1, 23), having at least one operating brake circuit (I) which can be controlled by an operating brake valve (2), a trailer control valve (6), controlling the pressure in a trailer brake conduit (19) and connected to the operating brake control circuit (I), of a twin-conduit brake system with a trailer brake valve (24) connected to the trailer control valve (6) via the trailer brake conduit (19) and a trailer supply conduit (11) and having a correction valve (9) which can be controlled by corresponding forces on a mechanical connection device of the motor vehicle (1, 23) measured by means of sensor (22), which correction valve (9) is located in a control conduit (8) branched off from the trailer supply conduit (11), characterised in that the pressure in the control conduit (8) led to the trailer control valve (6) can be influenced by the correction valve (9), while the trailer brake conduit (19) does not contain a shut-off element.

2. Compressed air brake device according to Claim 1, characterised in that the supply pressure varied by the correction valve (9) is supplied to the trailer control valve (6, 30) as the pressure parameter.

3. Compressed air brake device according to Claim 1, characterised in that when the brake device is configured with a conventional trailer control valve (30), the supply pressure influenced by the correction valve (9) is additionally connected to the trailer control valve (30).

4. Compressed air brake device according to one of Claims 1 to 3, characterised in that the correction valve (9) has two 2/2-way solenoid valves (16, 17) of which one is a through valve located in the control conduit (8) and the other is an external air valve connected to the control conduit (8).

5. Compressed air brake device according to one of Claims 1 to 4, characterised in that a 3/2-way valve (26) is inserted in a conduit (5) leading directly from an operating brake valve (2) to the trailer control valve (6), it being possible to ventilate the part of the conduit (5) at the trailer control valve end by means of this 3/2-way valve (26).

6. Compressed air brake device according to one of Claims 1 to 4, characterised in that a two-way non-return valve (32) is inserted in one (5') of the conduits (5, 5') leading from the operating brake valve (2) to the trailer control valve (6), the second end of the two-way non-return valve (32) being connected to the control conduit (8) branched off from the trailer supply conduit (11).

## Revendications

1. Installation de freinage à air comprimé pour véhicules à moteur (1, 23) avec au moins un circuit de commande de freinage (I) commandé par un maître cylindre (2), une vanne de commande de remorque (6) reliée au circuit de commande de frein (I) et commandant la pression dans une conduite de frein de remorque (19), cette vanne faisant partie d'une installation de freinage à deux conduites avec un maître cylindre de remorque (24) relié à la vanne de commande de remorque (6) par la conduite de freinage de remorque (19) et une conduite d'alimentation de remorque (11), et une vanne de correction (9) commandée par les forces mesurées par un capteur (22) sur les moyens d'attelage mécaniques du véhicule (1, 23), cette vanne étant située dans l'une des conduites de commande (8) dérivée de la conduite d'alimentation de remorque (11), installation caractérisée en ce que la pression de la conduite de commande (8) allant vers la vanne de commande de remorque (6) peut être influencée par la vanne de correction (9) alors que la conduite de freinage de remorque (19) ne comporte pas d'organe de coupure.

2. Installation de freinage à air comprimé selon la revendication 1, caractérisée en ce que la pression d'alimentation modifiée par la vanne de correction (9) est fournie comme grandeur de pression à la vanne de commande remorque (6, 30).

3. Installation de freinage à air comprimé selon la revendication 1, caractérisée en ce que dans le cas d'une conception de l'installation de freinage avec une vanne de commande de remorque (30), usuelle, la pression d'alimentation influencée par la vanne de correction (9) peut être appliquée en plus à la vanne de commande de remorque (30).

4. Installation de freinage à air comprimé selon l'une des revendications 1 à 3, caractérisée en ce que la vanne de correction (9) comporte deux électrovannes distributeur (16, 17) à 2/2 voies dont l'une est une vanne de passage prévue dans la conduite de commande (8) et dont l'autre est une vanne d'évacuation reliée à la conduite de commande (8).

5. Installation de freinage à air comprimé selon l'une des revendications 1 à 4, caractérisée en ce qu'une conduite (5) allant d'un maître cylindre (2) directement vers la vanne de commande de remorque (6) comporte une vanne distributeur à 3/2 voies (26) et qui permet d'évacuer la partie de la conduite (5) du côté de la vanne de commande de remorque.

6. Installation de freinage à air comprimé selon l'une des revendications 1 à 4, caractérisée en ce que l'une (5') des conduites (5, 5') allant du maître cylindre (2) vers la vanne de commande de remorque (6) comporte une soupape anti-retour (32) à deux branches dont le second côté est relié à la conduite de commande (8) dérivée de la conduite d'alimentation de remorque (11).
